# EUROPÄISCHE PATENTSCHRIFT

(11) **EP 2 192 321 B1**
(45) Veröffentlichungstag und Bekanntmachung des Hinweises auf die Patenterteilung: **20.03.2013**
(21) Anmeldenummer: 09012907.3
(22) Anmeldetag: 13.10.2009
(51) Int. Cl.: F16D 65/12, F16D 65/847

(54) **Innenbelüftete Bremsscheibe für Kraftfahrzeuge, insbesondere für Nutzfahrzeuge**
Internally ventilated brake disc for motor vehicles, in particular for commercial vehicles
Disque de frein aéré à l'intérieur pour véhicules automobiles, notamment pour véhicules utilitaires

(30) Priorität: 01.12.2008 DE 102008059839
(43) Veröffentlichungstag der Anmeldung: 02.06.2010
(73) Patentinhaber: MAN Truck & Bus AG, 80995 München (DE)
(72) Erfinder: Landsherr, Thomas, 80995 München (DE); Indinger, Thomas, 81677 München (DE); Schöttl, Christoph, 82061 Neuried (DE); Simon, Bernhard, 85435 Erding (DE)

(56) Entgegenhaltungen:
- WO-A-2008/078352
- DE-A1- 3 141 434
- DE-A1-102004 042 047
- DE-A1-102004 056 645
- DE-A1-102007 046 724
- FR-A- 2 872 876
- GB-A- 1 449 512
- US-A1- 2009 057 077

## Beschreibung

Die Erfindung betrifft eine innenbelüftete Bremsscheibe für Kraftfahrzeuge, insbesondere für Nutzfahrzeuge, wie beispielsweise Lastkraftwagen, Busse oder schwere Landfahrzeuge, oder Schienenfahrzeuge mit Scheibenbremse nach dem Oberbegriff des Anspruchs 1.

Bremsscheiben von Scheibenbremsen sind allgemein bekannt. Derartige Bremsscheiben sind meist topfförmig gestaltet und bestehen aus Gusseisen, Temperguss oder Stahlguss, wobei die Bremsscheiben aus wirtschaftlichen Gründen meistens aus Grauguss hergestellt werden.

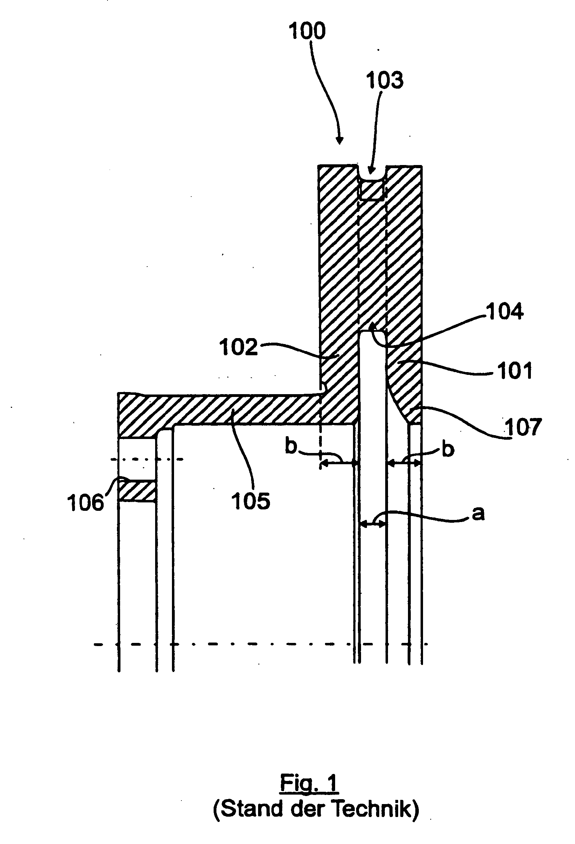

Des Weiteren sind innenbelüftete Bremsscheiben allgemein bekannt. Derartige innenbelüftete Bremsscheiben werden bei hoher Beanspruchung eingesetzt und bieten geometrisch bedingt die Möglichkeit einer Durchströmung des Bereichs der Bremsscheibe, in den durch Reibung die Wärmeleistung eingebracht wird (Reibringe). Damit kann eine bessere Kühlwirkung der Bremsscheibe erreicht werden. Ein derartiger herkömmlicher Aufbau einer innenbelüfteten Bremsscheibe ist in der den Stand der Technik darstellenden Fig. 1 gezeigt. Diese innenbelüftete Bremsscheibe 100 weist üblicherweise zwei zur Ausbildung eines Ringspalts 103 mit einem definierten Spaltabstand a voneinander beabstandete Reibringe 101, 102 mit jeweils gleicher Material- bzw. Wandstärke b auf. Die beiden Reibringe 101, 102 sind über eine Mehrzahl von im Ringspalt-angeordneten Verbindungsstegen 104 miteinander verbunden, wobei die einzelnen Verbindungsstege, was hier allerdings nicht dargestellt ist, in Umfangsrichtung der Bremsscheibe voneinander beabstandet sind und damit in allgemein bekannter Weise radial verlaufende Kanäle ausbilden.

Der Reibring 101 bildet dabei einen sogenannten inneren Reibring aus, während der Reibring 102 einen sogenannten äußeren Reibring ausbildet, an den sich im Bereich des freien Innendurchmessers ein auch als Hals bezeichneter Scheibentopf 105 der innenbelüfteten Bremsscheibe 100 anschließt. Dieser Scheibentopf 105 weist einen Flanschring 106 auf, mittels dem die Bremsscheibe fahrzeugseitig in allgemein bekannter Weise montiert werden kann. Es gibt aber auch andere Befestigungsmöglichkeiten, wie zum Beispiel die Verschraubung der Bremsscheibe.

Mit derartigen innenbelüfteten Bremsscheiben kann die Wärmeabfuhr gegenüber den herkömmlichen, aus einem einzigen Reibring bestehenden Bremsscheiben deutlich erhöht werden. Insbesondere in Verbindung mit schweren Fahrzeugen, wie beispielsweise Lastkraftwagen, Bussen oder schweren Landfahrzeugen, kann es aufgrund der hohen Brems- und damit Temperaturbelastung der innenbelüfteten Bremsscheiben nach wie vor zu hitzebedingten Beschädigungen, wie zum Beispiel Hitzerissen kommen, die schließlich sogar bis zur Zerstörung der Bremsscheibe führen können. Um in solchen Fällen eine noch bessere Belüftungswirkung in Verbindung mit innenbelüfteten Bremsscheiben zu erzielen, ist es weiter allgemein bekannt, die Reibringe der innenbelüfteten Bremsscheiben über deren gesamte Fläche zu lochen bzw. zu perforieren.

Vor allem nachteilig ist das höhere Gewicht der nicht belüfteten Bremsscheiben, das die ungefederten Massen des Fahrzeugs erhöht. Dies kann dem Fahrkomfort deutlich negativ beeinflussen und zudem, da sich das Rotationsträgheitsmoment der Bremsscheibe auf den Kraftstoffverbrauch auswirkt, zu einem erhöhten Kraftstoffverbrauch führen. Des Weiteren ist bei Nutzfahrzeugen ein hohes Gewicht auch im Hinblick auf die Beladungskapazität des Fahrzeuges von Nachteil.

Eine geteilte Bremsscheibe mit tangential angeordneten Verbindungsmitteln ist weiter bereits aus der DE 10 2007 046 724 A1 bekannt, die zudem Materialanformungen aufweist, die eine Oberflächenvergrößerurtg bewirken sowie eine Erhöhung der Strömungsturbulenzen im wandnahen Bereich der Innenseiten der Reibringteile ermöglichen sollen.

Eine ähnlich aufgebaute Bremsscheibe ist auch aus der FR 2 872 876 A1 bekannt, die dem Oberbegriff des vorliegenden Anspruchs 1 entspricht.

Die WO 2008/078352 A1 beschreibt eine innenbelüftete Bremsscheibe bei der auf den Reibringinnenseiten Vertiefungen ausgebildet sind, die Turbulenzen erzeugen sollen.

Die DE 10 2004 056 645 A1 beschreibt eine innenbelüftete Bremsscheibe mit zwei gegenüberliegenden Reibringscheiben, deren Wandabschnitte wellenförmig ausgebildet sind.

Weiter beschreibt die DE 31 41 434 A1 einen Bremsring für Bremsscheiben mit den Abstand zwischen den Ringkörpern überbrückenden Stehbolzen, die mit den Ringkörpem starr verbunden sind. Es wird eine geometrische Anordnung der Stehbolzen in Form von Geradenscharen vorgeschlagen.

Die US 2009/0057077 A1 zeigt einen Aufbau einer innenbelüfteten Bremsscheibe mit unterschiedlichen Wandstärken der Reibringe und die DE 10 2004 042 047 A1 zeigt einen Aufbau mit sich radial nach außen erstreckenden Strömungskanälen im Bereich zweier Reibringe.

Es ist daher Aufgabe der vorliegenden Erfindung, eine innenbelüftete Bremsscheibe für Kraftfahrzeuge, insbesondere für Nutzfahrzeuge, wie beispielsweise Lastkraftwagen, Busse oder schwere Landfahrzeuge, oder Schienenfahrzeuge mit Scheibenbremsen, zur Verfügung zu stellen, mittels der eine optimale bzw. optimierte Wärmeabfuhr möglich ist.

Diese Aufgabe wird gelöst mit den Merkmalen des Anspruchs 1. Vorteilhafte Ausgestaltungen hierzu sind Gegenstand der darauf rückgezogenen Unteransprüche

Erfindungsgemäß ist vorgesehen, dass die Reibringe zur Ausbildung eines - bezüglich des Innendurchmessers des jeweils anderen Reibrings gesehen - radialen Überstandes an einem der Reibringe als Strömungsleitelement im Bereich eines Lufteinströmkanals wenigstens abschnitts- oder bereichsweise mit unterschiedlichen Innendurchmessern ausgebildet sind. Mit einem derartigen radialen Überstand im Bereich des Lufteinströmkanals kann der Volumenstrom des in den Ringspalt einströmenden Luftstroms erheblich vergrößert werden, was zu einer deutlichen Erhöhung der Wärmeabfuhr von den Reibringen zu der Strömungsluft im Ringspalt führt.

Weiter ist erfindungsgemäß vorgesehen, dass der einen kleinen Innendurchmesser und damit den radialen Überstand ausbildende Reibring zudem mit einer schaufelartigen Geometrie versehen bzw. ausgebildet ist. Beispielsweise ist die schaufelartige Geometrie durch wenigstens eine Ausnehmung am radialen Überstand ausgebildet, bevorzugt durch eine konkav gekrümmte Ausnehmung.

Und schließlich ist erfindungsgemäß vorgesehen, dass sich eine durch mehrere in Umfangsrichtung voneinander beabstandete sowie noppenartig erhabene Turbulatoren gebildete Turbulatoren-Reihe unmittelbar an die schaufelartige Geometrie anschließt. Bevorzugt ist hierbei zudem eine Ausgestaltung, bei der die durch eine konkave Ausnehmung gebildete schaufelartige Geometrie direkt und fließend in die angrenzenden Turbulatoren übergeht, so dass diese Turbulatoren quasi Bestandteil der schaufelartigen Geometrie des radialen Überstandes bilden. Damit wird eine besonders effektive und vorteilhafte Erhöhung des Volumenstroms in Verbindung mit einer zusätzlichen Aufprägung einer turbulenten Strömung erzielt, mittels der die Luftströmungsverhältnisse im Bereich des Ringspalts so optimiert werden, dass eine hervorragende Wärmeabfuhr erzielt wird.

Erfindungsgemäß ist somit vorgesehen, den Ringspalt, insbesondere dessen Eintrittsbereich an der Innenseite und mögliche Verbindungsstege, so zu gestalten, dass der Volumenstrom beim Betrieb der Bremsscheibe maximal erhöht wird und/oder geometrische Elemente im Bereich des Ringspalts vorzusehen, die dazu geeignet sind, die Turbulenzintensität der Strömung im Ringspalt zu erhöhen. Mit diesen Maßnahmen wird ein besonders effektiver Wärmeübergang von den Reibflächen der Reibringe der Bremsscheibe an die durch den Ringspalt strömende Luft möglich.

Mittels dieser erfindungsgemäßen Maßnahme kann somit einzeln oder in Kombination miteinander
a) eine Verbesserung des Wärmeübergangs durch Erhöhung der Turbulenzintensität in der Strömung im Ringspalt erzielt werden,
b) eine Steigerung des durch den Ringspalt-strömenden Volumenstroms an Luft erzielt werden,
c) eine Vergrößerung der Oberfläche des Ringspalts erzielt werden,
d) die Geometrie des Ringspalts optimiert werden,
e) das Gewicht der Bremsscheibe signifikant reduziert werden.

Bevorzugt sind diese Turbulatoren voneinander und/oder von dem Verbindungssteg beabstandet. Die Turbulatoren sind dunk Form, Struktur oder Geometrie geeignet um im jeweiligen Einsatzfall der innenbelüfteten Bremsscheiben die gewünschte turbulente Strömung zu erzeugen. Besonders bevorzugt ist jedoch eine Ausgestaltung, bei der die Turbulatoren punktförmig ausgebildet sind, und zwar in Form von sogenannten Reibringnoppen. Derartige noppenförmig als Reibringnoppen ausgebildete Turbulatoren sind hervorragend geeignet, um im Bereich des Ringspalts eine turbulente Strömung zu erzeugen und die Oberfläche zu vergrößern. Beide Maßnahmen, nämlich einerseits turbulente Strömung sowie andererseits die Vergrößerung der Oberfläche trägt wesentlich dazu bei, die Wärmeabfuhr von den Reibringen an die durch den Ringspalt strömende Luft zu begünstigen.

Die Turbulatoren können dabei sowohl an lediglich einem als auch an beiden Reibringen in jeweils definierten Bereichen des Ringspalts angeordnet bzw. ausgebildet sein. Das heißt, dass die Turbulatoren grundsätzlich überall im Bereich des Ringspalts angeordnet werden können. Besonders bevorzugt ist jedoch die Anordnung von Turbulatoren am radial inneren Lufteinströmbereich der innenbelüfteten Bremsscheibe bzw. alternativ oder zusätzlich dazu auch am radial äußeren Luftausströmbereich des Ringspalts. Besonders bevorzugt ist hierbei eine Ausgestaltung, bei der die Turbulatoren mehreren voneinander radial beabstandeten Reihen wenigstens bereichsweise oder wenigstens abschnittsweise um den Umfang des jeweiligen Reibrings herum verlaufend angeordnet sind. Besonders bevorzugt ist jedoch eine vollständig um den Umfang des jeweiligen Reibrings herum verlaufende Anordnung, um turbulente Strömungsverwirbelungen in jedem Bereich des Ringspalts zu erzielen. Weiter ist die Anordnung derartiger Turbulator-Reihen im Bereich des radial inneren Lufteinströmbereichs besonders bevorzugt, um dem in den Ringspalt einströmenden Luftstrom bereits einströmseitig eine entsprechende Verwirbelung aufzwingen zu können.

Bevorzugt ist die Reihe bzw. sind die Reihen dabei so ausgebildet, dass die einzelnen Turbulatoren ein regelmäßiges Muster ausbilden, zum Beispiel mit einem jeweils gleichen Abstand voneinander angeordnet bzw. ausgebildet sind.

Die Höhe der Turbulatoren kann dabei stets gleich oder in definierten Bereichen unterschiedlich ausgebildet sein. Zum Beispiel kann bei mehreren radial beabstandeten Reihen von Turbulatoren die Höhe der Turbulatoren für wenigstens einen Teil der unterschiedlichen Reihen unterschiedlich ausgebildet sein. Die jeweils konkret gewählte Gestaltung hängt von den jeweils erforderlichen Einsatzbedingungen im praktischen Einsatz der innenbelüfteten Bremsscheibe ab.

Des Weiteren können die Turbulatoren bei einer Anordnung von Turbulatoren an den einander zugewandten Reibring-Wandbereichen beider Reibringe an, bezogen auf die Umfangsrichtung, gegenüberliegenden Reibscheibenbereichen in Radialrichtung gesehen wenigstens teil- oder bereichsweise auf gleicher Höhe oder wenigstens teil- oder bereichsweise versetzt zueinander angeordnet sein. Insbesondere die versetzte Anordnung zueinander kann besonders gut geeignet sein, um eine besonders effektive Verwirbelung des Luftstroms im Ringspalt zu erzielen und/oder eine Blockage der Durchströmung zu vermeiden.

Weiter können bei mehreren vorgesehenen Turbulator-Reihen die in Radialrichtung benachbarten Turbulator-Reihen wenigstens teilweise in Umfangsrichtung gegeneinander versetzt sein, vorzugsweise so bezüglich der einzelnen Turbulatoren gegeneinander versetzt sein, dass ein Turbulatoren der einen Turbulatoren in Umfangsrichtung gesehen zwischen zwei Turbulatoren der jeweils benachbarten Reihe liegt. Dabei ist insbesondere die mittige Anordnung zwischen zwei Turbulatoren der jeweils benachbarten Reihe bevorzugt.

Gemäß einer weiteren besonders bevorzugten Ausgestaltung hierzu können die in Radialrichtung benachbarten Verbindungsreihen wenigstens teilweise in Umfangsrichtung gesehen gegeneinander versetzt sein, insbesondere bezüglich der einzelnen Verbindungsstege so gegeneinander versetzt sein, dass ein Verbindungssteg der einen Verbindungsstegreihe in Umfangsrichtung gesehen zwischen zwei Verbindungsstegen der jeweils benachbarten Verbindungsstegreihe liegt. Besonders bevorzugt ist dabei eine mittig zwischen zwei Verbindungsstegen der jeweils benachbarten Verbindungsstegreihe liegende Anordnung. Des Weiteren ergeben sich hervorragende turbulente Strömungsverhältnisse im Bereich des Ringspalts mit einer Maßnahme, bei der die wenigstens eine Turbulatoren-Reihe an einem oder beiden Reibringen im Bereich des radial inneren Lufteinströmbereichs angeordnet ist, an die sich in Radialrichtung gesehen die Verbindungsstegreihen dergestalt anschließen, dass die in Radialrichtung gesehen unmittelbar an die erste Verbindungsstegreihe angrenzende Turbulatoren-Reihe gegenüber dieser in Umfangsrichtung versetzt ist. Dieser Versatz ist insbesondere so ausgebildet, dass jeweils ein Reibring-Toleranzbereich im Bereich zwischen zwei in Umfangsrichtung voneinander beabstandeten Verbindungsstegen der ersten Verbindungsstegreihe liegt. Auch hier ist wiederum die mittig dazwischenliegende Anordnung die bevorzugte Anordnung.

Gemäß einer weiteren besonders bevorzugten Ausgestaltung der vorliegenden Erfindungsidee ist vorgesehen, dass die Oberfläche der Wandbereiche des Ringspalts zur Ausbildung eines Strömungsleitelementes wenigstens bereichsweise mit einer eine turbulente Luftströmung bewirkenden und/oder begünstigenden Oberflächenrauheit, insbesondere einer Oberflächenrauheit größer als Rz35 gemäß DIN 4766, ausgebildet ist.

Besonders bevorzugt ist weiter vorgesehen, dass der, bezogen auf den montierten Zusatz der Bremsscheibe, innere Reibring wenigstens bereichsweise einen größeren Innendurchmesser aufweist als der äußere Reibring, der den Scheibentopf trägt. Denn durch diese Maßnahme ist sichergestellt, dass der hauptsächlich von der inneren Reibringseite her angesaugte Luftstrom nicht durch eine dort vorgesehene "kalte Nase" des inneren Reibrings herum in den Einströmkanal einströmen muss, sondern direkt auf eine trichterförmig erweiterte Einströmöffnung der Bremsscheibe trifft.

Weiter kann die schaufelartige Geometrie in Verbindung mit einem umfangsseitig umlaufenden radialen Überstand ebenfalls umfangsseitig umlaufend ausgebildet sein. Hierbei handelt es sich um die bevorzugte Ausführungsform. Alternativ dazu kann die schaufelartige Geometrie aber auch lediglich abschnittsweise vorgesehen bzw. ausgebildet sein.

Zudem ist gemäß einer weiteren besonders bevorzugten konkreten Ausgestaltung vorgesehen, dass der Innendurchmesser des einen Reibrings so reduziert ist, dass wenigstens eine durch mehrere voneinander in Umfangsrichtung voneinander beabstandete Turbulatoren gebildete Turbulatoren-Reihe am radialen Überstand des anderen Reibrings angeordnet ist. Besonders bevorzugt ist hierbei eine Ausgestaltung, bei der der Innendurchmesser des einen Reibrings so reduziert ist, dass wenigstens eine Reihe sowie die schaufelartige Geometrie am radialen Überstand des anderen Reibrings angeordnet ist. Damit werden die zuvor genannten Vorteile in besonders effektiver und funktionssicherer Weise erzielt.

Gemäß einer weiteren konkreten Ausgestaltung ist vorgesehen, dass die beiden Reibring-Innenseiten, im Querschnitt und unabhängig von im Ringspalt-angeordneten oder ausgebildeten Verbindungsstegen und/oder anderen dort gegebenenfalls angeordneten oder ausgebildeten Strömungsleitelementen betrachtet, jeweils eine Reibring-Innenebene ausbilden, die zur Ausbildung des Ringspalts einen vorgegebenen Spaltabstand voneinander aufweisen, wobei die beiden Reibring-Innenebenen in vorgegebenen Bereichen nicht parallel zueinander verlaufen. Mittels einer derartigen nicht parallelen Ausbildung der beiden Reibring-Innenflächen wird auf einfache Weise eine gewünschte Beeinflussung der Luftgeschwindigkeit im Ringspalt erzielbar, zum Beispiel indem sich der Ringspalt von der Einströmseite zur Ausströmseite hin konisch zuspitzt. Durch die Erhöhung der Luftgeschwindigkeit wird die Luftabfuhr und damit die Wärmeabfuhr aus dem Ringspalt wesentlich beeinflusst und begünstigt. Alternativ zu einer derartig lediglich beispielhaft genannten Ausgestaltung können auch konvexe oder konkave Geometrien gemeinsam oder alternativ zueinander vorgesehen bzw. ausgebildet sein.

Auch diese Maßnahme kann wiederum einzeln als auch in Verbindung mit einer der zuvor beschriebenen Maßnahmen an einer Bremsscheibe realisiert werden.

Gemäß einer weiteren bevorzugten Ausgestaltung ist vorgesehen, dass die Wandstärke der Reibringe unterschiedlich ausgebildet ist, insbesondere dergestalt unterschiedlich ausgebildet ist, dass der Ringspalt in Querschnitt durch die beiden Reibringe betrachtet, außermittig angeordnet ist. Dabei ist bevorzugt die Wandstärke des am Scheibentopf angebundenen äußeren Reibrings kleiner als die des inneren Reibrings. Weiter ist bevorzugt die Wandstärke so reduziert, dass der Masseunterschied zwischen äußerem und innerem Reibring in vorgegebenem Maße ausgeglichen ist, insbesondere in etwa ausgeglichen ist. Eine derartige "außermittige" Ringspaltanordnung lässt sich zudem, zum Beispiel in Verbindung mit einem Gießprozess, sehr einfach realisieren.

Mit sämtlichen der zuvor beschriebenen Maßnahmen wird somit eine erhebliche Verbesserung des Wärmeübergangs von den Bremsscheiben zu der Strömungsluft im Ringspalt erzielt, wobei diese Maßnahmen, wie zuvor bereits des Öfteren angeführt, sowohl einzeln als auch in beliebigen Kombinationen miteinander an einer innenbelüfteten Bremsscheibe realisiert sein können. Dies hängt wesentlich von den jeweils gegebenen Anforderungen des jeweiligen Einsatzfalles ab. Mit diesen erfindungsgemäßen Maßnahmen, die die Luftabfuhr und damit die Wärmeabfuhr von der Bremsscheibe optimieren, ist zugleich eine Gewichtsreduzierung der Bremsscheibe bei gleichbleibender mechanischer Festigkeit und Hitzerissbeständigkeit möglich, und zwar bei vergleichbarer Außengeometrie und bei identischem Werkstoff, da die an der Bremsscheibe auftretende niedrigere Temperatur in Verbindung mit einer derartigen Bremsscheibe auch dazu führt, dass die Bremsscheibe im Hinblick auf deren mechanische Festigkeit und Hitzerissbeständigkeit mit geringeren Anforderungen dimensioniert und ausgelegt werden kann als dies bei derzeit üblichen Bremsscheiben der Fall ist.

Die Erfindung wird nachfolgend anhand einer Zeichnung näher erläutert.

Es zeigen:
- Fig. 1: schematisch einen Teilquerschnitt durch eine innenbelüftete Bremsscheibe gemäß dem Stand der Technik,
- Fig. 2: schematisch eine perspektivische Ansicht einer erfindungsgemäßen innenbelüfteten Bremsscheibe,
- Fig. 3: schematisch einen perspektivischen Teilquerschnitt durch die erfindungsgemäße Bremsscheibe gemäß Fig. 2,
- Fig. 4: schematisch eine teilweise, perspektivische Ansicht des äußeren Reibrings,
- Fig. 5: schematisch eine teilweise perspektivische Darstellung des inneren Reibrings,
- Fig. 6: schematisch einen Teilquerschnitt durch eine erfindungsgemäße Ausführungsform der innenbelüfteten Bremsscheibe mit einer schaufelartigen Geometrie eines randseitigen Überstandes am Lufteinströmbereich, und
- Fig. 7: schematisch einen Tellquerschnitt durch eine weitere erfindungsgemäße Ausführungsform mit außermittigem Ringspalt.

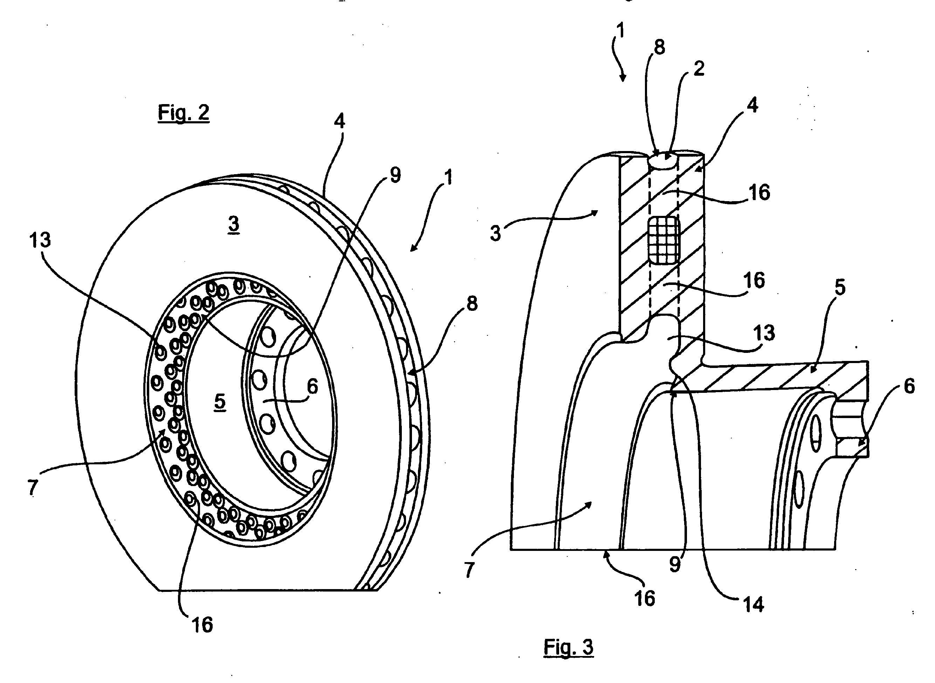

In der Fig. 2 ist schematisch und perspektivisch eine Ansicht einer innenbelüfteten Bremsscheibe 1 dargestellt, die einen inneren Reibring 3 und einen äußeren Reibring 4 aufweist, die zwischen sich einen Ringspalt 2 mit einem definierten Spaltabstand ausbilden.

Wie dies insbesondere auch aus der Fig. 3 hervorgeht, schließt sich an den äußeren Reibring 4 ein Hals- bzw. Scheibentopf 5 mit einem Flanschring 6 an.

Die Bremsscheibe 1 weist einen radial inneren Lufteinströmbereich 7 sowie einen radial äußeren Luftausströmbereich 8 auf.

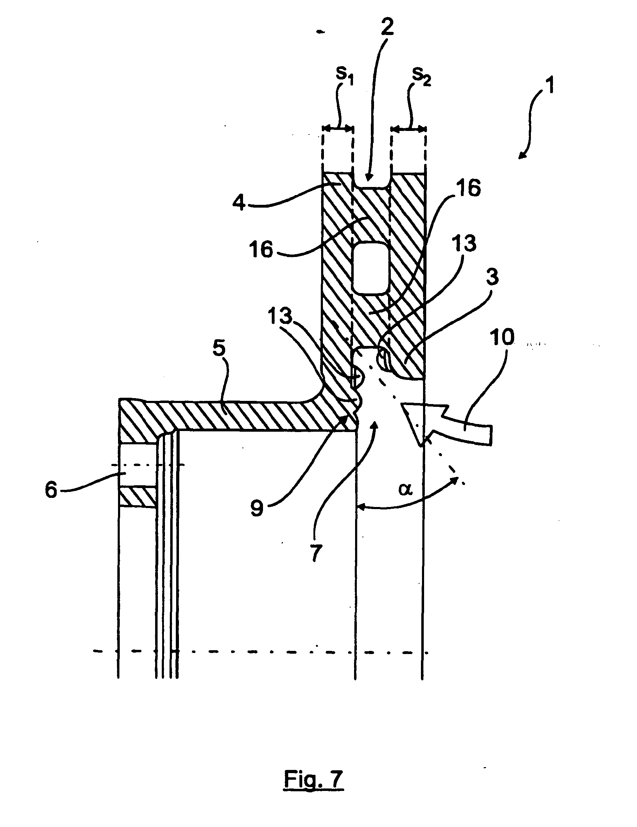

Am radial inneren Lufteinströmbereich 7 ist, wie dies insbesondere aus den Fig. 3, 6 und 7 ersichtlich ist, der innere Reibring 3 mit einem größeren Innendurchmesser ausgebildet als der äußere Reibring 4, so dass am äußeren Reibring 4 ein hier umlaufender radialer Überstand 9 ausgebildet wird, der eine sich in etwa trichterförmig zum inneren Reibring 3 erweiternde und hier beispielhaft mit einem Winkel α von zum Beispiel ca. 45° gegen die Bremsscheibenebene geneigt ist, wodurch der radiale Überstand als eine Art Luftschaufel am Lufteinströmbereich 7 wirkt, so dass eine große Menge an Kühlluft in den Ringspalt 2 eingesaugt werden kann. Wie insbesondere ein Vergleich der Fig. 1 und der Fig. 7 zeigt, braucht daher bei der erfindungsgemäßen Ausführungsform mit einem radialen Überstand 9 der Luftstrom anders, als dies bei der Ausführungsform gemäß dem Stand der Technik der Fall ist, nicht zuerst um die Nase 107 herum strömen, um dann von unten her in den Ringspalt 103 einzuströmen.

Wie dies der Fig. 7 weiter zu entnehmen ist, ist der äußere Reibring 4 bevorzugt mit einer Wandstärke S1 ausgebildet, die kleiner ist als die Wandstärke S2 des inneren Reibrings 3, wobei der Unterschied zwischen den beiden Wandstärken S1, S2 so gewählt ist, dass der durch die Anbindung des Scheibentopfes 5 an den äußeren Reibring 4 bewirkte Massenunterschied zwischen den beiden Reibringen 3, 4 in einem vorgegebenen Maße ausgeglichen wird.

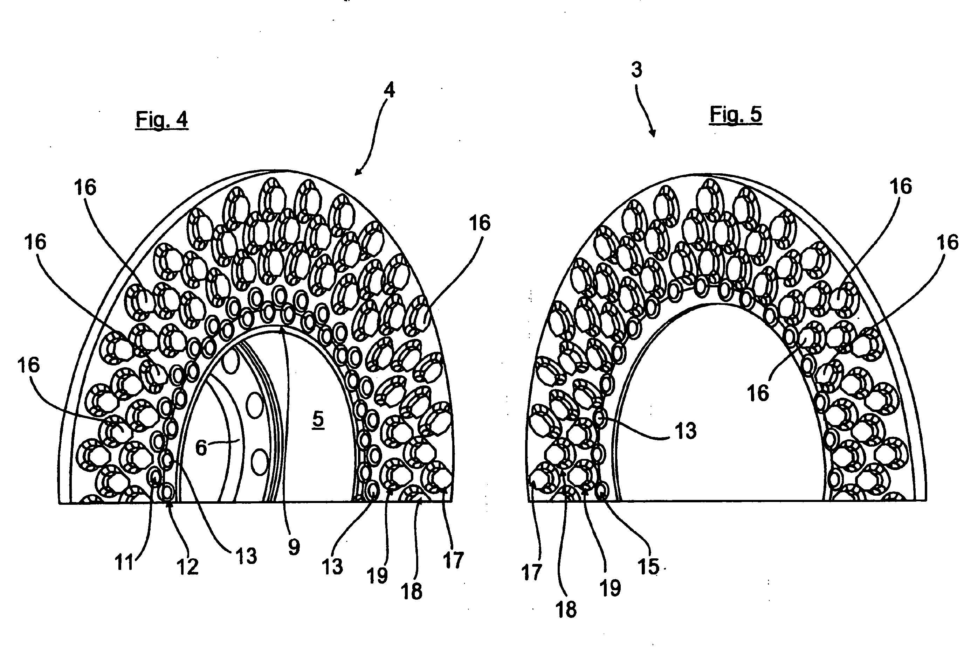

Wie dies nunmehr wiederum der Zusammenschau der Fig. 2 bis 7 entnommen werden kann, sind am radialen Überstand 9 zwei voneinander beabstandete und in Radialrichtung zueinander sowie in Umfangsrichtung zueinander versetzte Reihen von erhabenen Reibringnoppen 13 ausgebildet, wobei die Reibringnoppen 13 hier eine in etwa kugelförmige Außenkontur sowie eine in etwa gleiche Form und Größe aufweisen. Wie dies insbesondere aus der Fig. 2 und 3 sowie auch aus der Fig. 4 ersichtlich ist, sind die beiden Reihen 11, 12 von Reibringnoppen 13 hier so in Umfangsrichtung gegeneinander versetzt, dass die einzelnen Reibringnoppen 13 in etwa mittig zwischen zwei benachbarten Reibringnoppen 13 der jeweils benachbarten Reihe 11 bzw. 12 liegen.

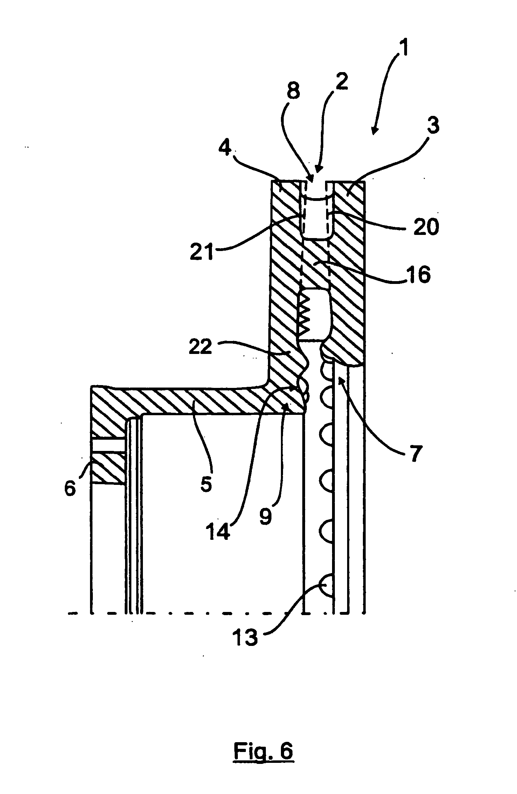

Wie dies weiter, insbesondere aus der Fig. 3 und 6 entnommen werden kann, schließt sich an die zur Bremsscheibenachse hin gerichtete unterste Reihe 12 von Reibringnoppen 13 eine, eine Luftführungslippe bzw. eine schaufelartige Geometrie ausbildende konkave Ausnehmung 14 an, die ebenfalls dazu beiträgt, im Lufteinströmbereich 7 möglichst viel Luft gezielt in den Ringspalt 2 einströmen zu lassen. Die Anordnung von hier zwei Reihen 11, 12 von Reibringnoppen 13 ist hier lediglich beispielhaft gewählt. Selbstverständlich kann auch lediglich eine Reihe vorgesehen sein oder können aber auch mehr als zwei Reihen derartiger Reibringnoppen 13 vorgesehen sein.

Ebenso beispielhaft ist hier, was insbesondere aus der Fig. 5 gut ersichtlich ist, am gegenüberliegenden, inneren Reibring 3 lediglich beispielhaft nur eine Reihe 15 von Reibringnoppen 13 angeordnet, die, wie dies insbesondere aus der Fig. 6 und der Fig. 7 ersichtlich ist, sowohl in Radialrichtung als auch in Umfangsrichtung (hier nicht dargestellt) gegenüber wenigstens einer der Reihen 11, 12 der Reibringnoppen 13 am äußeren Reibring 4 versetzt sein können. Dies ist aber nicht zwingend erforderlich.

In der Fig. 7 ist eine Ausgestaltung gezeigt, bei der am radialen Überstand 9 keine konkave Ausnehmung 14 ausgebildet ist. Grundsätzlich kann die konkave Ausnehmung 14 aber auch lediglich abschnittsweise, in Umfangsrichtung gesehen, am radialen Überstand 9 ausgebildet bzw. angeordnet sein.

Mit einem derartig ausgestalteten Lufteinströmbereich 7 des Ringspalts 2 wird, wie bereits zuvor beschrieben, die Möglichkeit eröffnet, eine große Menge an Luft in den Ringspalt 2 einströmen zu lassen, wobei diesem Luftstrom 10 dann durch die Reibringnoppen 13 bzw., sofern vorhanden, die konkave Ausnehmung 14 eine turbulente Strömung aufgeprägt wird, was den Wärmeübergang von den heißen Reibringen 3, 4 auf die Strömungsluft im Ringspalt 2 wesentlich beschleunigt bzw. begünstigt.

Um den Turbulenzgrad der einströmenden Kühlluft im Ringspalt 2 weiter zu erhöhen bzw. wenigstens aufrecht zu erhalten, ist als weitere Maßnahme hier vorgesehen, die die beiden Reibringe 3, 4 verbindenden Verbindungsstege 16 punktförmig auszubilden und wie insbesondere aus der Fig. 4 und 5 ersichtlich, diese in mehreren Verbindungsstegreihen 17, 18 und 19 umlaufend an der Bremsscheibe 1 bzw. den Reibringen 3, 4 anzuordnen. Lediglich beispielhaft sind hier drei Verbindungsstegreihen 17, 18 und 19 gezeigt.

Wie dies weiter insbesondere aus der Fig. 4 und 5 ersichtlich ist, sind die einzelnen benachbarten Verbindungsstegreihen 17, 18 und 19 hier bevorzugt mit jeweils in etwa identisch ausgebildeten Verbindungsstegen 16 versehen, wobei die einzelnen Verbindungsstege 16, ebenso wie die Reibringnoppen 13 bevorzugt einen in etwa gleichen Abstand voneinander aufweisen, wobei zudem auch hier, analog zu den Reibringnoppen 13 der Reihen 11, 12 am äußeren Reibring 4, die einzelnen benachbarten Verbindungsstegreihen 17, 18 und 19 in Umfangsrichtung so gegeneinander versetzt sind, dass ein Verbindungssteg 16 in etwa mittig zwischen zwei benachbarten Verbindungsstegen 16 der jeweils benachbarten Verbindungsstegreihe 17, 18 bzw. 19 liegt.

Im Übergang von der Verbindungsstegreihe 19 zu den Reihen 11, 15 der Reibringnoppen 13 am inneren Reibring 3 und am äußeren Reibring 4, ist die Anordnung ebenfalls so gewählt, dass ein Verbindungssteg 16 in etwa mittig zwischen zwei benachbarten Reibringnoppen 13 liegt und umgekehrt.

Wie dies in der Fig. 6 lediglich äußerst schematisch und strichliert eingezeichnet ist, können die beiden durch die Reibring-Innenflächen gebildeten Reibring-Innenebenen 20, 21 nicht parallel zueinander ausgerichtet sein, sondern zum Beispiel zum Luftausströmbereich 8 hin konisch zulaufen, wodurch die Strömungsgeschwindigkeit des Luftstroms im Ringspalt 2 zum Luftausströmbereich 8 hin erhöht werden kann, was ebenfalls eine verbesserte und schnellere Luftabfuhr und damit eine verbesserte und schnellere Wärmeabfuhr bewirkt.

Ferner können definierte Oberflächenbereiche des inneren Reibrings 3 und/oder des äußeren Reibrings 4 im Ringspalt mit einer eine turbulente Luftströmung bewirkenden bzw. begünstigenden Oberflächenrauheit ausgebildet sein, die deutlich über der Oberflächenrauheit liegt, wie sie normalerweise in Verbindung mit Gussteilen erhalten wird. Dies ist in der Fig. 6 lediglich schematisch und beispielhaft durch das Zackenprofil 22 dargestellt.

All diese eben beschriebenen Maßnahmen helfen, eine große Luftmenge in den Ringspalt 2 einströmen zu lassen, dort einen hervorragenden Wärmeübergang von den Reibringen 3, 4 auf den turbulenten Luftstrom, zu bewirken und anschließend den so erhitzten Luftstrom wieder über den Luftausströmbereich 8 schnell abströmen zu lassen, so dass eine derartige erfindungsgemäße innenbelüftete Bremsscheibe 1 auch bei großen und schweren Fahrzeugen gewichtsgünstig und damit gewichtsoptimiert hergestellt werden kann.

In Verbindung mit den oben beschriebenen erfindungsgemäßen Maßnahmen ist es unerheblich, ob die Bremsscheibe 1 als Topfbremsscheibe, Verbundbremsscheibe, plane Bremsscheibe oder mehrteilig gebaute Bremsscheibe ausgeführt ist bzw. aus welchem Werkstoff die Bremsscheibe besteht. Damit kann das Gewicht von innenbelüfteten Bremsscheiben bei gleichbleibender Außengeometrie und identischen Lebensdaueranforderungen verringert werden, wobei die zuvor beschriebenen Maßnahmen einzeln oder in Kombination die Wärmeabfuhr durch den Ringspalt 2 durch Erzeugung einer energiereicheren, turbulenten Strömung, durch Erhöhung der Luftstrommenge oder durch Vergrößerung der Oberfläche des Ringspalts 2 verbessert.

## Patentansprüche

1. Innenbelüftete Bremsscheibe für Kraftfahrzeuge, insbesondere für Nutzfahrzeuge,
mit zwei zur Ausbildung eines Ringspalts(2) mit einem definierten Spaltabstand voneinander beabstandeten Reibringen (3, 4), wobei die Reibringe (3, 4) durch eine Mehrzahl von im Ringspalt (2) angeordneten Verbindungsstegen miteinander verbunden sind, und wobei im Bereich des Ringspalts (2) wenigstens ein im Ringspalt (2) eine turbulente Strömung erzeugendes und/oder wenigstens ein den Volumenstrom in den Ringspalt (2) und/oder die Strömungsgeschwindigkeit eines Luftstroms (10) im Bereich des Ringspalts (2) beeinflussendes Strömungsleitelement (9; 13; 14; 16; 20; 21; 22) vorgesehen ist,
wobei die Reibringe (3, 4) zur Ausbildung eines radialen Überstandes (9) an einem der Reibringe (3, 4) als Strömungsleitelement im Bereich eines Lufteinströmkanals (7) wenigstens abschnitts- oder bereichsweise mit unterschiedlichen Innendurchmessern ausgebildet sind, wobei der einen kleineren Innendurchmesser und damit den radialen Überstand (9) ausbildende Reibring (4) mit einer schaufelartigen Geometrie (14) versehen und/oder ausgebildet ist,
**dadurch gekennzeichnet,**
**dass** sich wenigstens eine, durch mehrere in Umfangsrichtung voneinander beabstandete sowie noppenartig erhabene Turbulatoren (13) gebildete Turbulatoren-Reihe (12, 15) unmittelbar an die schaufelartige Geometrie (14) anschließt.

2. Innenbelüftete Bremsscheibe nach Anspruch 1, **dadurch gekennzeichnet, dass** die Turbulatoren (13) voneinander und/oder von den Verbindungsstegen (16) beabstandet sind.

3. Innenbelüftete Bremsscheibe nach Anspruch 1 oder 2, **dadurch gekennzeichnet, dass** die Turbulatoren (13) als punktförmige Reibringnoppen ausgebildet sind.

4. Innenbelüftete Bremsscheibe nach einem der Ansprüche 1 bis 3, **dadurch gekennzeichnet, dass** die Bremsscheibe (1) einen radial inneren Lufteinströmbereich (7) und einen radial äußeren Luftausströmbereich (8) aufweist, und
dass die Turbulatoren (13) wenigstens am radial inneren Lufteinströmbereich (7) des Ringspalts (2) angeordnet sind und dort wenigstens bereichsweise oder wenigstens abschnittsweise um den Umfang des jeweiligen Reibrings (3, 4) herum verlaufend angeordnet sind.

5. Innenbelüftete Bremsscheibe nach einem der Ansprüche 1 bis 4, **dadurch gekennzeichnet, dass** die Turbulatoren (13) in einer Reihe (15) oder in mehreren voneinander radial beabstandeten Reihen (11, 12), vorzugsweise mit einem regelmäßigen Muster und/oder mit einem jeweils gleichen Abstand zu- oder voneinander, wenigstens bereichsweise oder wenigstens abschnittsweise um den Umfang des jeweiligen Reibrings (3, 4) herum verlaufend angeordnet sind.

6. Innenbelüftete Bremsscheibe nach einem der Ansprüche 1 bis 5, **dadurch gekennzeichnet, dass** die Höhe der Turbulatoren (13) stets gleich oder in definierten Bereichen unterschiedlich ausgebildet ist.

7. Innenbelüftete Bremsscheibe nach Anspruch 5 und 6, **dadurch gekennzeichnet, dass** bei mehreren radial beabstandeten Reihen (11, 12) die Höhe der Turbulatoren (13) für wenigstens einen Teil der unterschiedlichen Reihen unterschiedlich ausgebildet ist.

8. Innenbelüftete Bremsscheibe nach einem der Ansprüche 1 bis 7, **dadurch gekennzeichnet, dass** die Turbulatoren bei einer Anordnung von Turbulatoren (13) an den einander zugewandten Reibringwandbereichen beider Reibringe (3, 4), an bezogen auf die Umfangsrichtung gegenüberliegenden Reibscheibenbereichen in Radialrichtung gesehen wenigstens teil- oder bereichsweise auf gleicher Höhe oder wenigstens teil- oder bereichsweise versetzt zueinander angeordnet sind.

9. Innenbelüftete Bremsscheibe nach einem der Ansprüche 5 bis 8, **dadurch gekennzeichnet, dass** bei mehreren Reihen die in Radialrichtung benachbarten Turbulatoren-Reihen (11, 12) wenigstens teilweise in Umfangsrichtung gegeneinander versetzt sind, vorzugsweise so bezüglich der einzelnen Turbulatoren (13) gegeneinander versetzt sind, dass ein Turbulatoren (13) der einen Turbulatoren-Reihe (11, 12) in Umfangsrichtung gesehen zwischen zwei Turbulatoren (13) der jeweils benachbarten Turbulatoren-Reihe (11, 12) liegt, vorzugsweise mittig zwischen zwei Turbulatoren (13) der jeweils benachbarten Turbulatoren-Reihe (11, 12) liegt.

10. Innenbelüftete Bremsscheibe nach einem der Ansprüche 1 bis 9, **dadurch gekennzeichnet, dass** die Turbulatoren (13) mit einer Verwirbelungen erzeugenden Kontur, insbesondere mit einer Abrisskantenkontur, ausgebildet sind.

11. Innenbelüftete Bremsscheibe nach einem der Ansprüche 1 bis 10, **dadurch gekennzeichnet, dass** die voneinander beabstandeten Verbindungsstege (16) im Ringspalt (2) mehrere in Radialrichtung und/oder in Bremsscheibenumfangsrichtung zueinander versetzte Verbindungsstegreihen (17, 18, 19) ausbilden.

12. Innenbelüftete Bremsscheibe nach Anspruch 11, **dadurch gekennzeichnet, dass** die Verbindungsstege (16) wenigstens einer der Verbindungsstegreihen (17, 18, 19) einen wenigstens bereichsweise gleichen Abstand voneinander aufweisen.

13. Innenbelüftete Bremsscheibe nach Anspruch 11 oder 12, **dadurch gekennzeichnet, dass** die in Radialrichtung benachbarten Verbindungsstegreihen (17, 18, 19) wenigstens teilweise in Umfangsrichtung gesehen gegeneinander versetzt sind, insbesondere so bezüglich der einzelnen Verbindungsstege (16) gegeneinander versetzt sind, dass ein Verbindungssteg (16) der einen Verbindungsstegreihe (17, 18, 19) in Umfangsrichtung gesehen zwischen zwei Verbindungsstegen (16) der jeweils benachbarten Verbindungsstegreihe (17, 18, 19) liegt, vorzugsweise mittig zwischen zwei Verbindungsstegen (16) der jeweils benachbarten Verbindungsstegreihe (17, 18, 19) liegt.

14. Innenbelüftete Bremsscheibe nach Anspruch 9 und 13, **dadurch gekennzeichnet, dass** die wenigstens eine Turbulatorenreihe an einem oder beiden Reibringen (3, 4) im Bereich des radial inneren Lufteinströmbereiches (7) angeordnet ist, an die sich in Radialrichtung gesehen die Verbindungsstegreihen (17, 18, 19) dergestalt anschließen, dass die in Radialrichtung gesehen unmittelbar an die erste Verbindungsstegreihe (19) angrenzende Turbulatoren (11) gegenüber dieser in Umfangsrichtung versetzt ist, insbesondere so gegenüber dieser versetzt ist, dass jeweils ein Reibring-Toleranzbereich im Bereich zwischen zwei in Umfangsrichtung voneinander beabstandeten Verbindungsstegen (16) der ersten Verbindungsstegreihe (19) liegt, vorzugsweise in etwa mittig zwischen diesen liegt.

15. Innenbelüftete Bremsscheibe nach Anspruch 14, **dadurch gekennzeichnet, dass** die Turbulatoren (13) hinsichtlich ihrer Querschnittsfläche kleiner ausgebildet sind als die Verbindungsstege (16), insbesondere in etwa ein Drittel bis halb so groß ausgebildet sind als die Verbindungsstege (16).

16. Innenbelüftete Bremsscheibe nach einem der Ansprüche 1 bis 15, **dadurch gekennzeichnet, dass** die Oberfläche der Wandbereiche des Ringspalts (2) zur Ausbildung eines Strömungsleitelementes wenigstens bereichsweise mit einer eine turbulente Luftströmung bewirkenden und/oder begünstigenden Oberflächenrauheit ausgebildet ist, insbesondere einer Oberflächenrauheit größer als Rz35 gemäß DIN 4766.

17. Innenbelüftete Bremsscheibe nach einem der Ansprüche 1 bis 16, **dadurch gekennzeichnet, dass** der, bezogen auf den montierten Zustand der Bremsscheibe (1), innere Reibring (3) wenigstens bereichsweise einen größeren Innendurchmesser aufweist als der äußere Reibring (4).

18. Innenbelüftete Bremsscheibe nach einem der Ansprüche 1 bis 17, **dadurch gekennzeichnet, dass** die schaufelartige Geometrie (14) durch wenigstens eine Ausnehmung, insbesondere durch wenigstens eine konkav gekrümmte Ausnehmung, am radialen Überstand ausgebildet ist.

19. Innenbelüftete Bremsscheibe nach einem der Ansprüche 1 bis 18, **dadurch gekennzeichnet, dass** die schaufelartige Geometrie (14) in Verbindung mit einem umfangsseitig umlaufenden radialen Überstand (9) ebenfalls umfangsseitig umlaufend oder in Umfangsrichtung wenigstens abschnittsweise ausgebildet ist.

20. Innenbelüftete Bremsscheibe nach einem der Ansprüche 1 bis 19, **dadurch gekennzeichnet, dass** die durch eine konkave Ausnehmung gebildete schaufelartige Geometrie (14) direkt und fließend in die angrenzenden Turbulatoren (13) übergeht, so dass diese Turbulatoren (13) Bestandteil der schaufelartigen Geometrie (14) des radialen Überstandes (9) bilden.

21. Innenbelüftete Bremsscheibe nach einem der Ansprüche 1 bis 20, **dadurch gekennzeichnet, dass** die schaufelartige Geometrie (14) am Reibring (3, 4) in einem Bereich des radialen Überstandes (9) ausgebildet ist, der bezüglich der Materialstärke verstärkt und oder gegenüber der Wandstärke dieses Reibrings (3, 4) dicker ausgebildet ist.

22. Innenbelüftete Bremsscheibe nach Anspruch 21, **dadurch gekennzeichnet, dass** der verstärkte Wandbereich durch einen sich auf der gegenüberliegenden Seite der schaufelartigen Geometrie (14) anschließenden Scheibentopf (5) eines äußeren Reibrings (4) gebildet ist.

23. Innenbelüftete Bremsscheibe nach einem der Ansprüche 1 bis 22, **dadurch gekennzeichnet,**
**dass** die beiden einander zugewandten Reibring-Innenseiten im Querschnitt und abhängig von im Ringspalt (2) angeordneten oder ausgebildeten Verbindungsstegen und/oder anderen dort gegebenenfalls angeordneten oder ausgebildeten Strömungsleitelementen betrachtet, jeweils eine Reibringinnenebene (20, 21) ausbilden, die zur Ausbildung des Ringspalts (2) einen vorgegebenen Spaltabstand voneinander aufweisen, und
**dass** die beiden Reibringinnenebenen (20, 21) zur Ausbildung eines Strömungsleitelementes in vorgegebenen Bereichen nicht parallel zueinander verlaufen.

24. Innenbelüftete Bremsscheibe nach Anspruch 23, **dadurch gekennzeichnet, dass** wenigstens eine der beiden Reibringinnenebenen (20, 21) in vorgegebenen Bereichen eine konkave oder konvexe Krümmung aufweist.

25. Innenbelüftete Bremsscheibe nach einem der Ansprüche 1 bis 24, **dadurch gekennzeichnet, dass** wenigstens eine der beiden Reibringinnenebenen (20, 21) in vorgegebenen Bereichen so gekrümmt oder geneigt ausgebildet ist, dass die beiden Reibringinnenebenen (20, 21) im Ringspalt unterschiedliche Spaltabstände voneinander aufweisen, insbesondere konisch zulaufend ausgebildet sind.

26. Innenbelüftete Bremsscheibe nach einem der Ansprüche 1 bis 25, **dadurch gekennzeichnet, dass** die Wandstärke der Reibringe (3, 4) unterschiedlich ausgebildet ist, insbesondere dergestalt unterschiedlich ausgebildet ist, dass der Ringspalt (2) im Querschnitt durch die beiden Reibringe (3, 4) betrachtet, außermittig angeordnet ist.

27. Innenbelüftete Bremsscheibe nach Anspruch 26, **dadurch gekennzeichnet, dass** die Wandstärke des am Scheibentopf (5) angebundenen äußeren Reibrings (4) kleiner ist als die des inneren Reibrings (3).

28. Innenbelüftete Bremsscheibe nach Anspruch 27, **dadurch gekennzeichnet, dass** die Wandstärke so reduziert ist, dass der Massenunterschied zwischen äußerem und innerem Reibring (3, 4) in vorgegebenem Maße ausgeglichen ist, insbesondere in etwa ausgeglichen ist.

## Claims

1. Internally ventilated brake disc for motor vehicles, in particular for commercial vehicles, having two friction rings (3, 4) which are spaced apart at a defined gap spacing in order to form an annular gap (2), the friction rings (3, 4) being connected to one another by a plurality of connecting webs which are arranged in the annular gap (2), and at least one flow guiding element (9; 13; 14; 16; 20; 21; 22) which generates a turbulent flow in the annular gap (2) and/or at least one flow guiding element (9; 13; 14; 16; 20; 21; 22) which influences the volumetric flow into the annular gap (2) and/or the flow speed of an air flow (10) in the region of the annular gap (2) being provided in the region of the annular gap (2), the friction rings (3, 4) being configured at least in sections or in regions with different internal diameters in order to form a radial projection (9) on one of the friction rings (3, 4) as flow guiding element in the region of an air inflow channel (7), the friction ring (4) which forms a smaller internal diameter and therefore the radial projection (9) being provided and/or configured with a blade-like geometry (14), **characterized in that** at least one turbulator row (12, 15) which is formed by a plurality of turbulators (13) which are spaced apart from one another in the circumferential direction and are elevated in a bump-like manner adjoins the blade-like geometry (14) directly.

2. Internally ventilated brake disc according to Claim 1, **characterized in that** the turbulators (13) are spaced apart from one another and/or from the connecting webs (16).

3. Internally ventilated brake disc according to Claim 1 or 2, **characterized in that** the turbulators (13) are configured as punctiform friction-ring bumps.

4. Internally ventilated brake disc according to one of Claims 1 to 3, **characterized in that** the brake disc (1) has a radially inner air inflow region (7) and a radially outer air outflow region (8), and **in that** the turbulators (13) are arranged at least on the radially inner air inflow region (7) of the annular gap (2) and are arranged there so as to extend at least in regions or at least in sections around the circumference of the respective friction ring (3, 4).

5. Internally ventilated brake disc according to one of Claims 1 to 4, **characterized in that** the turbulators (13) are arranged in one row (15) or in a plurality of rows (11, 12) which are spaced apart from one another radially, preferably with a regular pattern and/or with a respectively identical spacing from one another, so as to extend at least in regions or at least in sections around the circumference of the respective friction ring (3, 4).

6. Internally ventilated brake disc according to one of Claims 1 to 5, **characterized in that** the height of the turbulators (13) is configured to be constantly identical or different in defined regions.

7. Internally ventilated brake disc according to Claims 5 and 6, **characterized in that**, in the case of a plurality of rows (11, 12) which are spaced apart radially, the height of the turbulators (13) is configured to be different for at least one part of the different rows.

8. Internally ventilated brake disc according to one of Claims 1 to 7, **characterized in that**, in the case of an arrangement of turbulators (13) on the friction-ring wall regions which face one another of both friction rings (3, 4), the turbulators are arranged, as viewed in the radial direction, on friction-disc regions which lie opposite one another in the circumferential direction, such that the said turbulators are at the same height at least partially or in regions or such that they are offset with respect to one another at least partially or in regions.

9. Internally ventilated brake disc according to one of Claims 5 to 8, **characterized in that**, in the case of a plurality of rows, the turbulator rows (11, 12) which are adjacent in the radial direction are offset with respect to one another at least partially in the circumferential direction, are preferably offset with respect to one another with regard to the individual turbulators (13) in such a way that, as viewed in the circumferential direction, a turbulator (13) of one turbulator row (11, 12) lies between two turbulators (13) of the respectively adjacent turbulator row (11, 12), preferably lies centrally between two turbulators (13) of the respectively adjacent turbulator row (11, 12).

10. Internally ventilated brake disc according to one of Claims 1 to 9, **characterized in that** the turbulators (13) are configured with a contour which generates eddies, in particular with a breakaway-edge contour.

11. Internally ventilated brake disc according to one of Claims 1 to 10, **characterized in that** the connecting webs (16) which are spaced apart from one another form a plurality of connecting-web rows (17, 18, 19) in the annular gap (2) which are offset with respect to one another in the radial direction and/or in the brake-disc circumferential direction.

12. Internally ventilated brake disc according to Claim 11, **characterized in that** the connecting webs (16) of at least one of the connecting-web rows (17, 18, 19) are at a spacing from one another which is identical at least in regions.

13. Internally ventilated brake disc according to Claim 11 or 12, **characterized in that** the connecting-web rows (17, 18, 19) which are adjacent in the radial direction are offset with respect to one another at least partially as viewed in the circumferential direction, in particular are offset with respect to one another with regard to the individual connecting webs (16) in such a way that, as viewed in the circumferential direction, a connecting web (16) of one connecting-web row (17, 18, 19) lies between two connecting webs (16) of the respectively adjacent connecting-web row (17, 18, 19), preferably lies centrally between two connecting webs (16) of the respectively adjacent connecting-web row (17, 18, 19).

14. Internally ventilated brake disc according to Claims 9 and 13, **characterized in that** the at least one turbulator row on one or both friction rings (3, 4) is arranged in the region of the radially inner air inflow region (7), which turbulator row is adjoined, as viewed in the radial direction, by the connecting-web rows (17, 18, 19) in such a way that the turbulators (11) which adjoin the first connecting-web row (19) directly as viewed in the radial direction are offset with respect to the said first connecting-web row (19) in the circumferential direction, in particular are offset with respect to the said first connecting-web row (19) in such a way that in each case one friction-ring tolerance region lies in the region between two connecting webs (16) of the first connecting-web row (19) which are spaced apart from one another in the circumferential direction, preferably lies approximately centrally between them.

15. Internally ventilated brake disc according to Claim 14, **characterized in that** the turbulators (13) are of smaller configuration with regard to their cross-sectional area than the connecting webs (16), in particular are configured to be from approximately one third to one half as large as the connecting webs (16).

16. Internally ventilated brake disc according to one of Claims 1 to 15, **characterized in that**, in order to form a flow guiding element, the surface of the wall regions of the annular gap (2) is configured at least in regions with a surface roughness which brings about and/or promotes a turbulent airflow, in particular a surface roughness which is greater than Rz35 according to DIN 4766.

17. Internally ventilated brake disc according to one of Claims 1 to 16, **characterized in that** the inner (in relation to the mounted state of the brake disc (1)) friction ring (3) has a greater internal diameter at least in regions than the outer friction ring (4).

18. Internally ventilated brake disc according to one of Claims 1 to 17, **characterized in that** the blade-like geometry (14) is formed by at least one recess, in particular by at least one concavely curved recess, on the radial projection.

19. Internally ventilated brake disc according to one of Claims 1 to 18, **characterized in that**, in conjunction with an all-around circumferential-side radial projection (9), the blade-like geometry (14) is configured to extend likewise all around on the circumferential side or at least in sections in the circumferential direction.

20. Internally ventilated brake disc according to one of Claims 1 to 19, **characterized in that** the blade-like geometry (14) which is formed by a concave recess merges directly and flowingly into the adjacent turbulators (13), with the result that the said turbulators (13) form a constituent part of the blade-like geometry (14) of the radial projection (9).

21. Internally ventilated brake disc according to one of Claims 1 to 20, **characterized in that** the blade-like geometry (14) is formed on the friction ring (3, 4) in a region of the radial projection (9) which is reinforced with regard to the material thickness and/or is configured to be thicker than the wall thickness of the said friction ring (3, 4).

22. Internally ventilated brake disc according to Claim 21, **characterized in that** the reinforced wall region is formed by a disc pot (5) of an outer friction ring (4), which disc pot (5) is adjacent on the opposite side of the blade-like geometry (14).

23. Internally ventilated brake disc according to one of Claims 1 to 22, **characterized in that**, as viewed in cross section and in a manner which is dependent on connecting webs which are arranged or formed in the annular gap (2) and/or other flow guiding elements which are possibly arranged or formed there, the two friction-ring inner sides which face one another in each case form a friction-ring inner plane (20, 21) which are at a predefined gap spacing from one another in order to form the annular gap (2), and **in that** the two friction-ring inner planes (20, 21) do not extend parallel to one another in predefined regions in order to form a flow guiding element.

24. Internally ventilated brake disc according to Claim 23, **characterized in that** at least one of the two friction-ring inner planes (20, 21) has a concave or convex curvature in predefined regions.

25. Internally ventilated brake disc according to one of Claims 1 to 24, **characterized in that** at least one of the two friction-ring inner planes (20, 21) is of curved or inclined configuration in predefined regions in such a way that the two friction-ring inner planes (20, 21) are at different gap spacings from one another in the annular gap, in particular are configured so as to taper conically.

26. Internally ventilated brake disc according to one of Claims 1 to 25, **characterized in that** the wall thickness of the friction rings (3, 4) is configured to be different, in particular is configured to be different in such a way that, as viewed in the cross section through the two friction rings (3, 4), the annular gap (2) is arranged eccentrically.

27. Internally ventilated brake disc according to Claim 26, **characterized in that** the wall thickness of the outer friction ring (4) which is attached to the disc pot (5) is smaller than that of the inner friction ring (3).

28. Internally ventilated brake disc according to Claim 27, **characterized in that** the wall thickness is reduced in such a way that the mass difference between outer and inner friction ring (3, 4) is equalized to a predefined extent, in particular is equalized approximately.

## Revendications

1. Disque de frein aéré à l'intérieur pour véhicules automobiles, en particulier véhicules utilitaires,
comprenant deux bagues de friction (3, 4) espacées l'une de l'autre d'un espacement d'interstice défini pour créer un interstice annulaire (2), les bagues de friction (3, 4) étant connectées l'une à l'autre par une pluralité de nervures de liaison disposées dans l'interstice annulaire (2), et au moins un élément de guidage de l'écoulement (9 ; 13 ; 14 ; 16 ; 20 ; 21 ; 22) produisant dans l'interstice annulaire (2) un écoulement turbulent et/ou influençant le débit volumique dans l'interstice annulaire (2) et/ou la vitesse d'écoulement d'un courant d'air (10) dans la région de l'interstice annulaire (2) étant prévu,
les bagues de friction (3, 4) étant réalisées dans la région d'un canal d'afflux d'air (7) au moins en partie ou par section avec différents diamètres intérieurs pour réaliser une avancée radiale (9) au niveau de l'une des bagues de friction (3, 4) en tant qu'élément de guidage de l'écoulement, la bague de friction (4) constituant un plus petit diamètre intérieur et donc l'avancée radiale (9) étant munie d'une géométrie (14) en forme d'aube et/ou étant réalisée avec une telle géométrie,
**caractérisé en ce**
**qu'**au moins une rangée de turbulateurs (12, 15) formée par plusieurs turbulateurs (13) espacés les uns des autres dans la direction périphérique et rehaussés en forme de noppes se raccorde directement à la géométrie en forme d'aube (14).

2. Disque de frein aéré à l'intérieur selon la revendication 1, **caractérisé en ce que** les turbulateurs (13) sont espacés les uns des autres et/ou des nervures de liaison (16).

3. Disque de frein aéré à l'intérieur selon la revendication 1 ou 2, **caractérisé en ce que** les turbulateurs (13) sont réalisés sous forme de noppes de bague de friction ponctuelles.

4. Disque de frein aéré à l'intérieur selon l'une quelconque des revendications 1 à 3, **caractérisé en ce que** le disque de frein (1) présente une région d'afflux d'air (7) radialement intérieure et une région de sortie d'air (8) radialement extérieure, et
**en ce que** les turbulateurs (13) sont disposés au moins sur la région d'afflux d'air (7) radialement intérieure de l'interstice annulaire (2) et à cet endroit au moins en partie ou au moins par section sont disposés tout autour de la périphérique de la bague de friction respective (3, 4).

5. Disque de frein aéré à l'intérieur selon l'une quelconque des revendications 1 à 4, **caractérisé en ce que** les turbulateurs (13) sont disposés dans une rangée (15) ou en plusieurs rangées (11, 12) espacées radialement les unes des autres, de préférence avec un motif régulier et/ou avec une distance à chaque fois égale l'une à l'autre ou l'une de l'autre, au moins en partie ou au moins par section en s'étendant tout autour de la périphérie de la bague de friction respective (3, 4).

6. Disque de frein aéré à l'intérieur selon l'une quelconque des revendications 1 à 5, **caractérisé en ce que** la hauteur des turbulateurs (13) est réalisée de manière constamment égale ou différente dans des régions définies.

7. Disque de frein aéré à l'intérieur selon les revendications 5 et 6, **caractérisé en ce que** pour plusieurs rangées espacées radialement (11, 12), la hauteur des turbulateurs (13) pour au moins une partie des différentes rangées est réalisée de manière différente.

8. Disque de frein aéré à l'intérieur selon l'une quelconque des revendications 1 à 7, **caractérisé en ce que** les turbulateurs, dans le cas d'un agencement de turbulateurs (13) au niveau des régions de paroi de bague de friction tournées l'une vers l'autre des deux bagues de friction (3, 4), sont disposés au niveau de régions de disque de friction opposées par rapport à la direction périphérique, vu dans la direction radiale, au moins en partie ou par section à la même hauteur ou au moins en partie ou par section de manière décalée les uns par rapport aux autres.

9. Disque de frein aéré à l'intérieur selon l'une quelconque des revendications 5 à 8, **caractérisé en ce que** dans le cas de plusieurs rangées, les rangées de turbulateurs (11, 12) adjacentes dans la direction radiale sont décalées les unes des autres au moins en partie dans la direction périphérique, de préférence sont décalées les unes par rapport aux autres par rapport aux turbulateurs individuels (13), de telle sorte qu'un turbulateur (13) de l'une des rangées de turbulateurs (11, 12) se situe, vu dans la direction périphérique, entre deux turbulateurs (13) de la rangée de turbulateurs adjacente respective (11, 12), de préférence centralement entre deux turbulateurs (13) de la rangée de turbulateurs adjacente respective (11, 12).

10. Disque de frein aéré à l'intérieur selon l'une quelconque des revendications 1 à 9, **caractérisé en ce que** les turbulateurs (13) sont réalisés avec un contour produisant des tourbillons, en particulier avec un contour d'arête de décrochage.

11. Disque de frein aéré à l'intérieur selon l'une quelconque des revendications 1 à 10, **caractérisé en ce que** les nervures de liaison (16) espacées l'une de l'autre dans l'interstice annulaire (2) constituent plusieurs rangées de nervures de liaison (17, 18, 19) décalées les unes des autres dans la direction radiale et/ou dans la direction périphérique du disque de frein.

12. Disque de frein aéré à l'intérieur selon la revendication 11, **caractérisé en ce que** les nervures de liaison (16) d'au moins l'une des rangées de nervures de liaison (17, 18, 19) présentent une distance identique au moins par section.

13. Disque de frein aéré à l'intérieur selon la revendication 11 ou 12, **caractérisé en ce que** les rangées de nervures de liaison (17, 18, 19) adjacentes dans la direction radiale sont décalées les unes des autres au moins en partie, vu dans la direction périphérique, en particulier sont décalées les unes des autres par rapport aux nervures de liaison individuelles (16) de telle sorte qu'une nervure de liaison (16) de l'une des rangées de nervures de liaison (17, 18, 19) se situe, vu dans la direction périphérique, entre deux nervures de liaison (16) de la rangée de nervures de liaison respective adjacente (17, 18, 19), de préférence centralement entre deux nervures de liaison (16) de la rangée de nervures de liaison respectivement adjacente (17, 18, 19).

14. Disque de frein aéré à l'intérieur selon les revendications 9 et 13, **caractérisé en ce que** l'au moins une rangée de turbulateurs est disposée sur une ou deux bagues de friction (3, 4) dans la région de la région d'afflux d'air (7) radialement interne, à laquelle se raccordent, vu dans la direction radiale, les rangées de nervures de liaison (17, 18, 19) de telle sorte que les turbulateurs (11) directement adjacents à la première rangée de nervures de liaison (19), vu dans la direction radiale, soient décalés par rapport à celle-ci dans la direction périphérique, notamment soient décalés par rapport à celle-ci de telle sorte qu'à chaque fois une région de tolérance de bague de friction se situe dans la région entre deux nervures de liaison (16) de la première rangée de nervures de liaison (19) espacées l'une de l'autre dans la direction périphérique, de préférence se situe approximativement centralement entre celles-ci.

15. Disque de frein aéré à l'intérieur selon la revendication 14, **caractérisé en ce que** les turbulateurs (13), en termes de leur surface en section transversale, sont plus petits, notamment à raison approximativement d'un tiers à la moitié, que les nervures de liaison (16),

16. Disque de frein aéré à l'intérieur selon l'une quelconque des revendications 1 à 15, **caractérisé en ce que** la surface des régions de paroi de l'interstice annulaire (2) pour créer un élément de guidage de l'écoulement est réalisée au moins par section avec une rugosité de surface provoquant et/ou favorisant un écoulement d'air turbulent, notamment une rugosité de surface supérieure à Riz35 selon DIN 4766.

17. Disque de frein aéré à l'intérieur selon l'une quelconque des revendications 1 à 16, **caractérisé en ce que** la bague de friction interne (3), par rapport à l'état monté du disque de frein (1), présente au moins par section un plus grand diamètre intérieur que la bague de friction externe (4).

18. Disque de frein aéré à l'intérieur selon l'une quelconque des revendications 1 à 17, **caractérisé en ce que** la géométrie (14) en forme d'aube est réalisée par au moins un évidement, notamment par au moins un évidement de courbure concave sur l'avancée radiale.

19. Disque de frein aéré à l'intérieur selon l'une quelconque des revendications 1 à 18, **caractérisé en ce que** la géométrie (14) en forme d'aube est réalisé en association avec une avancée radiale (9) entièrement périphérique, de manière également entièrement périphérique ou au moins par portion dans la direction périphérique.

20. Disque de frein aéré à l'intérieur selon l'une quelconque des revendications 1 à 19, **caractérisé en ce que** la géométrie (14) en forme d'aube formée par un évidement concave se prolonge directement et en douceur par les turbulateurs adjacents (13), de telle sorte que ces turbulateurs (13) fassent partie de la géométrie (14) en forme d'aube de l'avancée radiale (9).

21. Disque de frein aéré à l'intérieur selon l'une quelconque des revendications 1 à 20, **caractérisé en ce que** la géométrie (14) en forme d'aube est réalisée sur la bague de friction (3, 4) dans une région de l'avancée radiale (9) qui est réalisée de manière renforcée par rapport à l'épaisseur de matériau, ou plus épaisse par rapport a l'épaisseur de paroi de cette bague de friction (3, 4).

22. Disque de frein aéré à l'intérieur selon la revendication 21, **caractérisé en ce que** la région de paroi renforcée est formée par un pot de disque (5) d'une bague de friction externe (4) se raccordant au côté opposé de la géométrie (14) en forme d'aube.

23. Disque de frein aéré à l'intérieur selon l'une quelconque des revendications 1 à 22, **caractérisé en ce que**
les deux côtés intérieurs de la bague de friction tournés l'un vers l'autre, considérés en section transversale et en fonction de nervures de liaison disposées ou réalisées dans l'interstice annulaire (2) et/ou d'autres éléments de guidage de l'écoulement réalisés ou disposés éventuellement à cet endroit, constituent à chaque fois un plan intérieur de bague de friction (20, 21), qui présentent, l'un par rapport à l'autre, pour la réalisation de l'interstice annulaire (2), un espacement d'interstice prédéfini, et
**en ce que** les deux plans intérieurs de bague de friction (20, 21) ne s'étendent pas parallèlement l'un à l'autre pour créer un élément de guidage de l'écoulement dans des régions prédéfinies.

24. Disque de frein aéré à l'intérieur selon la revendication 23, **caractérisé en ce qu'**au moins l'un des deux plans intérieurs de bague de friction (20, 21) présente, dans des régions prédéfinies, une courbure concave ou convexe.

25. Disque de frein aéré à l'intérieur selon l'une quelconque des revendications 1 à 24, **caractérisé en ce qu'**au moins l'un des deux plans intérieurs de bague de friction (20, 21) est réalisé, dans des régions prédéfinies, sous forme courbée ou inclinée de telle sorte que les deux plans intérieurs de bague de friction (20, 21) présentent, l'un par rapport à l'autre, différents espacements d'interstice dans l'interstice annulaire, notamment soient réalisés de manière à converger coniquement.

26. Disque de frein aéré à l'intérieur selon l'une quelconque des revendications 1 à 25, **caractérisé en ce que** l'épaisseur de paroi des bagues de friction (3, 4) est réalisée différemment, notamment est réalisée différemment de telle sorte que l'interstice annulaire (2), considéré en section transversale à travers les deux bagues de friction (3, 4), soit disposé de manière excentrée.

27. Disque de frein aéré à l'intérieur selon la revendication 26, **caractérisé en ce que** l'épaisseur de paroi de la bague de friction externe (4) raccordée au pot de disque (5) est inférieure à celle de la bague de friction interne (3).

28. Disque de frein aéré à l'intérieur selon la revendication 27, **caractérisé en ce que** l'épaisseur de paroi est réduite dans une mesure telle que la différence de masse entre la bague de friction externe et interne (3, 4) soit compensée dans une mesure prédéterminée, notamment soit approximativement compensée.
